# EUROPEAN PATENT SPECIFICATION

(11) **EP 3 322 230 B1**
(45) Date of publication and mention of the grant of the patent: **05.02.2020**
(21) Application number: 15901370.5
(22) Date of filing: 17.08.2015
(51) Int. Cl.: H04W 88/08, H04W 88/06, H04W 72/08, H04W 72/04, H04W 56/00, H04W 52/36, H04W 52/14

(54) **COMMUNICATION METHOD AND DEVICE, TERMINAL AND BASE STATION**
KOMMUNIKATIONSVERFAHREN UND VORRICHTUNG, ENDGERÄT UND BASISSTATION
PROCÉDÉ ET DISPOSITIF DE COMMUNICATION, TERMINAL, ET STATION DE BASE

(43) Date of publication of application: 16.05.2018
(73) Proprietor: Huawei Technologies Co., Ltd., Longgang District Shenzhen, Guangdong 518129 (CN)
(72) Inventor: LI, Qiming, Shenzhen Guangdong 518129 (CN); CUI, Jie, Shenzhen Guangdong 518129 (CN); LI, Anjian, Shenzhen Guangdong 518129 (CN); HAN, Jing, Shenzhen Guangdong 518129 (CN)
(74) Representative: Thun, Clemens
(86) International application number: PCT/CN2015/087267
(87) International publication number: WO 2017/028165

(56) References cited:
- WO-A1-2014/163351
- WO-A1-2014/163351
- CN-A- 102 196 479
- CN-A- 103 069 896
- CN-A- 103 931 242
- US-A1- 2015 181 547

## Description

### TECHNICAL FIELD

The present invention relates to the communications field, and in particular, to a communication method, a communications apparatus, a terminal, and a base station.

### BACKGROUND

A dual connectivity scenario is a scenario in which UE (User Equipment, user equipment) serves simultaneously two network nodes: an MeNB (Master evolved Node B, master evolved NodeB) and an SeNB (Secondary evolved Node B, secondary evolved NodeB). This means that the UE can send an uplink subframe by using at least two cell sets. The UE has specific limitation on maximum uplink transmit power, that is, a sum of power that is simultaneously allocated by the UE in multiple cell sets for sending the uplink subframe cannot exceed maximum transmit power of the UE.

For example, US 2016/0057752A1 refers to a method and an apparatus for transmitting uplink data by means of multiple serving cells. A method for a terminal for transmitting uplink data by means of multiple serving cells may comprise the steps of: the terminal receiving a first timing advance command (TAC) for a first serving cell and a second TAC for a second serving cell; and determining whether the terminal transmits uplink data by means of the second serving cell on the basis of whether the timing difference is below the threshold value, wherein the timing difference is acquired on the basis of the first TAC and the second TAC, and the first serving cell can be a cell configured so that an uplink can be always transmitted regardless of the timing difference.

Further, US 2015/0181547A1 refers to a plurality of cells grouped into a primary cell group and a secondary cell group. The wireless device receives a timing advance command comprising a time adjustment value and an index of the secondary cell group. The wireless device applies the time adjustment value to uplink transmission timing of the secondary cell group. The wireless device triggers an action when the difference between primary cell group timing and secondary cell group timing is greater than a value.

It is assumed that the UE needs to separately send uplink sub frames n, n+1, n+2, ... in a cell set 1 of the MeNB and a cell set 2 of the SeNB. A sum of transmit power that is allocated by the UE in the cell set 1 for sending the uplink subframe n and transmit power that is allocated by the UE in the cell set 2 for sending the uplink subframe n cannot exceed the maximum transmit power of the UE. Likewise, a sum of transmit power that is allocated by the UE in the cell set 1 for sending the uplink subframe n+1 and transmit power that is allocated by the UE in the cell set 2 for sending the uplink subframe n+1 cannot exceed the maximum transmit power of the UE. Transmit power of another uplink subframe is also allocated in the foregoing manner.

However, a TA (Timing Advance, timing advance) for sending the uplink subframe by the UE in the cell set 1 is different from a TA for sending the uplink subframe by the UE in the cell set 2, and consequently, for any uplink subframe, for example, the uplink subframe n, the UE cannot simultaneously send the uplink subframe n in the cell set 1 and the cell set 2. That is, time for sending the uplink subframe n in the cell set 1 is earlier or later than time for sending the uplink subframe n in the cell set 2. Consequently, there is a partially overlapping area between the uplink subframe n sent in the cell set 1 and the uplink subframe n+1 sent in the cell set 2, or there is a partially overlapping area between the uplink subframe n sent in the cell set 2 and the uplink subframe n+1 sent in the cell set 1. When a time of the overlapping area is less than a maximum uplink timing difference, a power allocation operation or a power back-off operation may be performed on the overlapping area, to ensure that a sum of power in the overlapping area is less than the maximum uplink transmit power.

The overlapping area is caused because the TA of the cell set 1 is different from the TA of the cell set 2, and duration of the overlapping area is equal to a difference between the TA of the cell set 1 and the TA of the cell set 2. When a network side or the UE adjusts the TA of the cell set 1 or the TA of the cell set 2, the difference between the TA of the cell set 1 and the TA of the cell set 2 may become larger and exceed the maximum timing difference, that is, the duration of the overlapping area exceeds the maximum timing difference. When the difference between the TAs of the two cell sets exceeds the maximum timing difference, the current UE does not know how to perform processing, and the UE may break a connection to a network node, thereby causing huge damage to network performance.

### SUMMARY

Embodiments of the present invention provide a communication method, a communications apparatus, and a base station, so as to avoid a case in which a terminal breaks a connection to a network node and further huge damage is caused to network performance. The technical solutions are as follows:

In a first aspect a communication method performed by a terminal is provided, the method comprising:
**a.)** obtaining a timing advance, TA, offset of a first cell set, wherein the first cell set comprises at least one cell, and the at least one cell is a cell that is of a first base station and whose TA needs to be adjusted,
**b.)** calculating an adjusted TA according to the TA offset of the first cell set and a current TA of the first cell set, and calculating a first TA difference between the adjusted TA of the first cell set and a TA of each cell set of a second base station, wherein the first base station is a master base station configuring the second base station, being a secondary base station, for the terminal,
**c.)** if there is a second cell set that is in the cell sets of the second base station and of which the first TA difference reaches a preset threshold performing the following steps:
   **c1.**) if both, the first cell set and the second cell set are master cell sets, sending first signaling to the first base station, wherein the first signaling is used to request the first base station to configure a new secondary base station to substitute the second base station for the terminal, wherein the first signaling contains an identifier of the first cell set, and sending second signaling to the second base station, wherein the second signaling is used to notify the second base station that the terminal is to stop uplink transmission in the second cell set, wherein the second signaling contains an identifier of the second cell set,
   **c2**.) if the first cell set is the master cell set and the second cell set is a secondary cell set,
      ∘ in a first alternative, sending third signaling to the first base station used to request the first base station to configure the new secondary base station for the terminal, wherein the third signaling contains the identifier of the first cell set, and sending fourth signaling to the second base station used to notify the second base station that the terminal is to stop uplink transmission in the second cell set, wherein the fourth signaling contains the identifier of the second cell set,
      ∘ in a second alternative instead of the first alternative, sending fifth signaling to the second base station used to request the second base station to configure a new secondary cell set for the terminal, wherein the fifth signaling contains the identifier of the second cell set,
   **c3**.)if the first cell set is the secondary cell set and the second cell set is the master cell set, sending sixth signaling to the first base station used to request the first base station to configure the new secondary cell set, wherein the sixth signaling contains the identifier of the first cell set,
   **c4**.)if both, the first cell set and second cell set are secondary cell sets, selecting a cell set among the first and second cell set and sending a seventh signaling to a base station corresponding to the selected cell set, wherein the seventh signaling is used to request the base station of the selected cell set to configure the new secondary cell set and the seventh signaling contains an identifier of the selected cell set, wherein the selecting the cell set among the first cell set and the second cell set comprises:
      ∘ selecting a cell set with smaller average reference signal received power, RSRP, or a smaller average channel quality indicator, CQI, from the first cell set and the second cell set as the selected cell set,
         or,
      ∘ selecting a cell set with a smaller quantity of activated cells from the first cell set and the second cell set as the selected cell set,
         or,
      ∘ calculating a second TA difference between the first cell set and each cell set of the second base station other than the second cell set and a third TA difference between the second cell set and each cell set of the first base station other than the first cell set, and selecting a cell set among the first cell set and the second cell set corresponding to a calculated maximum TA difference among the second and third TA differences,
**d.)** in case of step **c1.**), starting a timing when the first signaling is sent;
   in case of step **c2**.), starting the timing when the third or fifth signaling is sent,
   in case of step **c3**.), starting the timing when the sixth signaling is sent,
   in case of step **c4**.), starting the timing when the seventh signaling is sent,
   before a timing time reaches a preset time, refusing to adjust the TA of the first cell set,
   when the timing time reaches the preset time, detecting whether there is the first TA difference that is between the first cell set of the first base station and each cell set of the second base station and that reaches the preset threshold; and if there is the first TA difference that reaches the preset threshold, performing the following steps:
   ∘ in case of step **c1.**), stopping sending first uplink data in the second cell set,
   ∘ in case of step **c2**.) or **c3**.), stopping sending second uplink data in the secondary cell set,
   ∘ in case of step **c4**.), sending eighth signaling to the base station corresponding to the selected cell set, wherein the eighth signaling contains an identifier of the selected cell set or an uplink sending stopping instruction, wherein the eighth signaling is used to notify the base station corresponding to the selected cell set that the terminal is to stop sending third uplink data in the selected cell set and stopping sending the third uplink data in the selected cell set.

In a second aspect a apparatus configured to perform the above method is provided.

In a third aspect a computer-readable storage medium is provided having a program recorded thereon, wherein the program makes a computer execute the above method.

In the embodiments of the present invention, in a dual connectivity scenario, when the TA of the first cell set is adjusted, the TA offset of the first cell set is obtained; the TA difference between the first cell set and each cell set of the second base station is obtained according to the TA offset after the TA of the first cell set is adjusted; and if there is the second cell set of which the TA difference reaches the preset threshold, uplink transmission in the first cell set or the second cell set is stopped according to the type of the first cell set and the type of the second cell set. In this way, when the TA difference between the first cell set and the second cell set reaches the preset threshold because the TA of the first cell set is adjusted, the terminal takes corresponding measures to process the first cell set and the second cell set, so as to avoid a case in which the terminal breaks a connection to a network node and further huge damage is caused to network performance.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a diagram of a network architecture of a dual connectivity scenario according to an embodiment of the present invention;
FIG. 2 is a sequence diagram of uplink data sending according to an embodiment of the present invention;
FIG. 3 is a flowchart of a communication method according to an embodiment of the present invention;
FIG. 4 is a flowchart of another communication method according to an embodiment of the present invention;
FIG. 5 is a flowchart of another communication method according to an embodiment of the present invention;
FIG. 6 is a flowchart of another communication method according to an embodiment of the present invention;
FIG. 7 is a flowchart of another communication method according to an embodiment of the present invention;
FIG. 8 is a schematic structural diagram of a terminal according to an embodiment of the present invention;
FIG. 9 is a schematic structural diagram of a secondary base station according to an embodiment of the present invention;
FIG. 10 is a schematic structural diagram of a master base station according to an embodiment of the present invention;
FIG. 11 is a schematic structural diagram of a communications apparatus according to an embodiment of the present invention;
Fig. 12 is a schematic structural diagram of another communications apparatus according to an embodiment of the present invention; and
FIG. 13 is a schematic structural diagram of another communications apparatus according to an embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

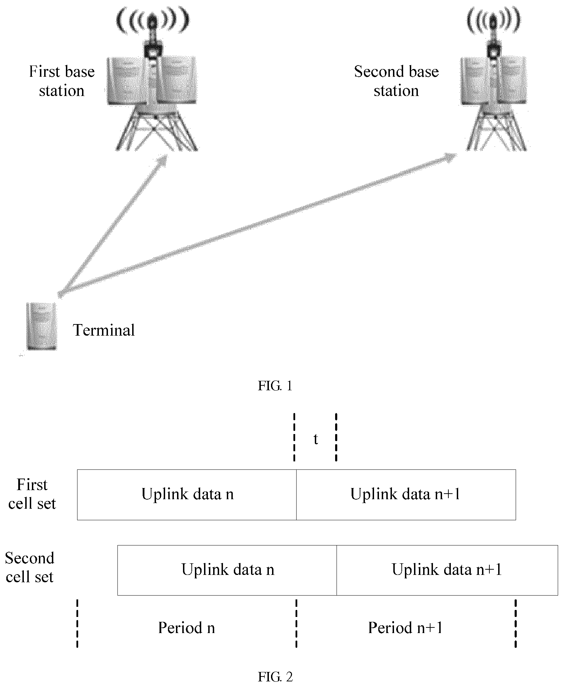

Referring to FIG. 1, an embodiment of the present invention is applied to a dual connectivity scenario, and in the dual connectivity scenario, a terminal serves two network nodes at the same time: an MeNB and an SeNB, that is, there is a network connection between the terminal and each of the two network nodes. Each network node may configure a cell set for the terminal, and the terminal may simultaneously send uplink data in cell sets configured by the two network nodes. In the present invention, the uplink data includes all uplink signals such as an uplink reference signal, uplink physical control channel information, and service data in an uplink physical shared channel.

Each network node includes at least one cell set, the cell set includes at least one cell, and each cell included in the cell set has a same TA. A TA of the cell set is the TA of each cell in the cell set. The terminal periodically sends the uplink data, and each period includes a time point for sending the uplink data. At the time point for sending the uplink data in each period, the terminal advances or postpones sending of the uplink data in a cell set of the MeNB according to a TA of the cell set of the MeNB, and advances or postpones sending of the uplink data in a cell set of the SeNB according to a TA of the cell set of the SeNB.

In each period, a sum of transmit power that is allocated by the terminal to the uplink data sent in the cell set of the MeNB and power that is allocated by the terminal to the uplink data sent in the cell set of the SeNB does not exceed maximum transmit power of the terminal. For example, referring to FIG. 2, in a period n, a sum of transmit power that is allocated by the terminal to data n sent in the cell set of the MeNB and transmit power that is allocated by the terminal to data n sent in the cell set of the SeNB does not exceed the maximum transmit power of the terminal, and in a period n+1, a sum of transmit power that is allocated by the terminal to data n+1 sent in the cell set of the MeNB and transmit power that is allocated by the terminal to data n+1 sent in the cell set of the SeNB does not exceed the maximum transmit power of the terminal.

However, because a TA of each cell set of the MeNB is different from a TA of each cell set of the SeNB, in a same period, time at which the terminal sends the uplink data in the cell set of the MeNB is different from time at which the terminal sends the uplink data in the cell set of the SeNB. Consequently, uplink data sent by the terminal in the cell set of the MeNB in any period partially overlaps uplink data sent by the terminal in the cell set of the SeNB in a next period, or uplink data by the terminal in the cell set of the SeNB in any period partially overlaps uplink data by the terminal in the cell set of the MeNB in a next period, and duration of an overlapping part is equal to a TA difference between the two cell sets. For example, referring to FIG. 2, in the period n, time at which the terminal sends the uplink data n in the cell set of the MeNB is different from time at which the terminal sends the uplink data n in the cell set of the SeNB, and in the period n+1, time at which the terminal sends the uplink data n+1 in the cell set of the MeNB is different from time at which the terminal sends the uplink data n+1 in the cell set of the SeNB. Consequently, the data n sent in the cell set of the SeNB in the period n partially overlaps the data n+1 sent in the cell set of the MeNB in the period n+1, and duration t of an overlapping part is equal to a TA difference between the two cell sets.

Because the terminal allocates, in each period, transmit power to uplink data that needs to be sent, a sum of transmit power of uplink data in a time t of an overlapping part may exceed the maximum transmit power of the terminal. If the time t of the overlapping part does not exceed a maximum timing difference of the terminal, the foregoing problem may be resolved by performing a power allocation operation or a power back-off operation on each piece of uplink data. However, if the time t of the overlapping part exceeds the maximum timing difference of the terminal, the foregoing problem cannot be resolved by using the power allocation operation or the power back-off operation.

When the terminal actively adjusts a TA of a cell set of a network node or a network side needs to adjust a TA of a cell set of a network node, after the TA of the cell set is adjusted, a TA difference between the cell set and one or several cell sets of another network node may become larger, that is, the time t of the overlapping part becomes larger, and the TA difference is equal to the time t. When the time t reaches a preset threshold, the terminal may process the cell sets of the two network nodes by using any one of the following embodiments, so as to avoid causing huge damage to network performance. The preset threshold may be the maximum timing difference of the terminal, or may be less than the maximum timing difference of the terminal.

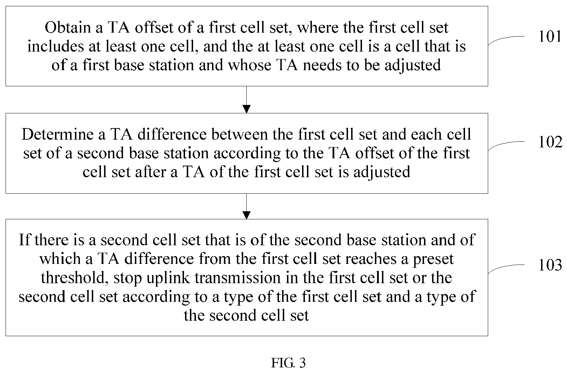

Referring to FIG. 3, an embodiment of the present invention provides a communication method, and the method includes the following steps:
Step 101: Obtain a TA offset of a first cell set, where the first cell set includes at least one cell, and the at least one cell is a cell that is of a first base station and whose TA needs to be adjusted.
Step 102: Determine a TA difference between the first cell set and each cell set of a second base station according to the TA offset of the first cell set after a TA of the first cell set is adjusted.
Step 103: If there is a second cell set that is of the second base station and of which a TA difference from the first cell set reaches a preset threshold, stop uplink transmission in the first cell set or the second cell set according to a type of the first cell set and a type of the second cell set.

In this embodiment of the present invention, in a dual connectivity scenario, when the TA of the first cell set is adjusted, the TA offset of the first cell set is obtained; the TA difference between the first cell set and each cell set of the second base station is obtained according to the TA offset after the TA of the first cell set is adjusted; and if there is the second cell set of which the TA difference reaches the preset threshold, uplink transmission in the first cell set or the second cell set is stopped according to the type of the first cell set and the type of the second cell set. In this way, when the TA difference between the first cell set and the second cell set reaches the preset threshold because the TA of the first cell set is adjusted, the terminal takes corresponding measures to process the first cell set and the second cell set, so as to avoid a case in which the terminal breaks a connection to a network node and further huge damage is caused to network performance.

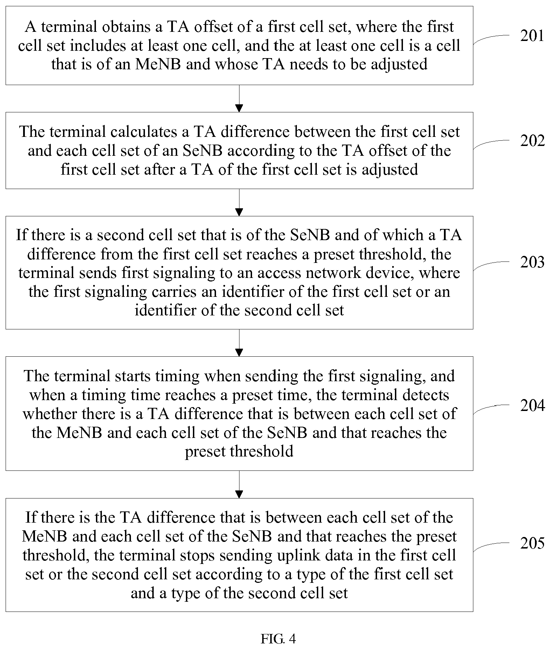

An embodiment of the present invention provides a communication method. This embodiment is applied to a dual connectivity scenario, the dual connectivity scenario includes an MeNB and an SeNB, and a terminal is connected to both the MeNB and the SeNB. Referring to FIG. 4, the method includes the following steps.

Step 201: The terminal obtains a TA offset of a first cell set, where the first cell set includes at least one cell, and the at least one cell is a cell that is of the MeNB and whose TA needs to be adjusted.

The terminal obtains a TA of the first cell set when the TA of the first cell set needs to be adjusted. There are two situations in which the TA of the first cell set needs to be adjusted. One is that the MeNB needs to adjust the TA of the first cell set, and the other is that the terminal needs to actively adjust the TA of the first cell set.

When the MeNB adjusts the TA of the first cell set, the MeNB sends a timing advance command to the terminal, and the timing advance command carries the TA offset of the first cell set. Accordingly, this step may be as follows: The terminal receives the timing advance command sent by the MeNB, and extracts the TA offset of the first cell set from the timing advance command. When the terminal actively adjusts the TA of the first cell set, the terminal generates the TA offset of the first cell set.

Step 202: The terminal calculates a TA difference between the first cell set and each cell set of the SeNB according to the TA offset of the first cell set after a TA of the first cell set is adjusted.

Specifically, the terminal calculates the adjusted TA according to the TA offset of the first cell set and the current TA of the first cell set, and calculates a difference between the adjusted TA and a TA of each cell set of the SeNB, to obtain the TA difference between the first cell set with the adjusted TA and each cell set of the SeNB.

In the two base stations included in the dual connectivity scenario, one base station is a master base station, that is, the MeNB, and the other base station is a secondary base station, that is, the SeNB. The SeNB is configured by the MeNB for the terminal. The terminal cannot break a connection to the MeNB; otherwise, the terminal may stop all uplink transmission. Cell sets of the MeNB include two types of cell sets: a master cell set and a secondary cell set, and similarly, cell sets of the SeNB also include a master cell set and a secondary cell set.

It should be noted that, in this embodiment, after obtaining the TA offset of the first cell set, instead of immediately adjusting the TA of the first cell set according to the TA offset, the terminal first refuses to adjust the TA of the first cell set, and performs this step.

Step 203: If there is a second cell set that is of the SeNB and of which a TA difference from the first cell set reaches a preset threshold, the terminal sends first signaling to an access network device, where the first signaling carries an identifier of the first cell set or an identifier of the second cell set.

If there is only one cell set that is of the SeNB and of which a TA difference from the first cell set reaches the preset threshold, the second cell set is the one cell set. If there are multiple cell sets that are of the SeNB and of which TA differences separately from the first cell set reach the preset threshold, the second cell set is the multiple cell sets.

The access network device may be the MeNB or the SeNB. The preset threshold may be a maximum timing difference of the terminal or a pre-configured threshold, and the pre-configured threshold is less than the maximum timing difference of the terminal. The pre-configured threshold may be pre-configured on the terminal by the MeNB or the SeNB, or may be pre-configured on the terminal by technical personnel. The pre-configured threshold is less than the maximum timing difference of the terminal, and in this way, the first cell set and the second cell set can be processed in advance before a time t of an overlapping part between uplink data sent in the first cell set and uplink data sent in the second cell set reaches the maximum timing difference, so as to prevent a time t of an overlapping part between any two pieces of uplink data from exceeding the maximum timing difference.

Optionally, in this step, the terminal may send the first signaling to the MeNB or the SeNB according to a type of the first cell set and a type of the second cell set, which is specifically as follows:
If both the first cell set and the second cell set are master cell sets, the terminal sends the first signaling to the MeNB, where the first signaling is used to request the MeNB to configure a new SeNB for the terminal; and sends second signaling to the SeNB, where the second signaling is used to notify the SeNB that the terminal is to stop uplink transmission in the second cell set. The first signaling carries the identifier of the first cell set, and the second signaling carries the identifier of the second cell set. The MeNB receives the first signaling, determines the first cell set identified by the identifier that is of the first cell set and that is carried in the first signaling, and when determining that the first cell set is a master cell set, determines to configure a new SeNB for the terminal. The new SeNB selects a third cell set for the terminal from a cell set of the new SeNB, and configures the third cell set for the terminal. The SeNB receives the second signaling, and stops scheduling the terminal in the second cell set according to the identifier that is of the second cell set and that is carried in the second signaling.

If the first cell set is a master cell set and the second cell set is a secondary cell set, the terminal sends the first signaling to the MeNB, where the first signaling is used to request the MeNB to configure a new SeNB for the terminal, and the first signaling carries the identifier of the first cell set; and sends second signaling to the SeNB, where the second signaling is used to notify the original SeNB that the terminal is to stop uplink transmission in the second cell set, and the second signaling carries the identifier of the second cell set. The MeNB receives the first signaling, and configures a new SeNB for the terminal. The new SeNB selects a third cell set for the terminal from a cell set of the new SeNB, and configures the third cell set for the terminal. The SeNB receives the second signaling, and stops scheduling the terminal in the second cell set according to the identifier that is of the second cell set and that is carried in the second signaling. Alternatively, the terminal sends the first signaling to the SeNB. The first signaling is used to request the SeNB to configure a new secondary cell set for the terminal, and the first signaling carries the identifier of the second cell set. The SeNB stops scheduling the terminal in the second cell set according to the identifier of the second cell set, selects a third cell set for the terminal from cell sets of the SeNB other than the second cell set, and configures the third cell set for the terminal.

If the first cell set is a secondary cell set and the second cell set is a master cell set, the terminal sends the first signaling to the MeNB. The first signaling is used to request the MeNB to configure a new secondary cell set for the terminal, and the first signaling carries the identifier of the first cell set. The MeNB receives the first signaling, determines the cell set identified by the identifier of the first cell set, and when determining that the cell set is a secondary cell set, determines to configure a new secondary cell set for the terminal, stops scheduling the terminal in the first cell set, selects a third cell set from other cell sets of the MeNB other than the first cell set, and configures the third cell set for the terminal.

Optionally, when the MeNB configures the new SeNB for the terminal, the MeNB instructs, by using RRC (Radio Resource Control, radio resource control) dedicated signaling, UE to access the new SeNB, and adds, to the RRC dedicated signaling, SeNB system information that is required for accessing the new SeNB.

If both the first cell set and the second cell set are secondary cell sets, the terminal selects a cell set from the first cell set and the second cell set, and sends the first signaling to a base station corresponding to the selected cell set. The first signaling is used to request the base station to configure a new secondary cell set for the terminal, and the first signaling carries an identifier of the selected cell set. The base station receives the first signaling, stops uplink scheduling in the cell set identified by the identifier that is of the cell set and that is carried in the first signaling, selects a third cell set from other cell sets of the base station other than the cell set identified by the identifier of the cell set, and configures the third cell set for the terminal.

Optionally, the terminal may select the cell set in the following manners:
Manner 1: The second cell set that belongs to the SeNB is selected.
Manner 2: A cell set with smaller average RSRP (Reference Signal Receiving Power, reference signal received power), poorer average RSRQ (Reference Signal Receiving Quality, reference signal received quality), or a smaller average CQI (Channel Quality Indicator, channel quality indicator) is selected from the first cell set and the second cell set.
   The average RSRP, the average RSRQ, or the average CQI is used to represent signal quality of the cell set. The terminal measures RSRP, RSRQ, or a CQI of each cell in the first cell set, and calculates average RSRP, average RSRQ, or an average CQI of the first cell set according to the RSRP, the RSRQ, or the CQI of each cell in the first cell set. The terminal measures RSRP, RSRQ, or a CQI of each cell in the second cell set, and calculates average RSRP, average RSRQ, or an average CQI of the second cell set according to the RSRP, the RSRQ, or the CQI of each cell in the second cell set. The terminal compares the average RSRP of the first cell set with the average RSRP of the second cell set, compares the average RSRQ of the first cell set with the average RSPQ of the second cell set, or compares the average CQI of the first cell set with the average CQI of the second cell set, to obtain the cell set with the smaller average RSRP, the cell set with the poorer average RSRQ, or the cell set with the smaller average CQI.
Manner 3: A cell set with a smaller quantity of activated cells is selected from the first cell set and the second cell set.

The terminal may obtain a quantity of activated cells included in the first cell set and a quantity of activated cells included in the second cell set, and compares the quantity of activated cells in the first cell set with the quantity of activated cells in the second cell set, to obtain the cell set with the smaller quantity of activated cells.

Manner 4: A TA difference between the first cell set and each cell set of the SeNB other than the second cell set and a TA difference between the second cell set and each cell set of the MeNB other than the first cell set are calculated, and a cell set corresponding to a calculated maximum TA difference is selected from the first cell set and the second cell set.

Further, in this step, the first signaling may further carry a TA difference between the first cell set and the second cell set.

Alternatively, the first signaling may further carry a difference between the maximum timing difference of the terminal and a TA difference between the first cell set and the second cell set.

Alternatively, the first signaling may further carry an alarm indication, and the alarm indication is used to indicate that a TA difference between the first cell set and the second cell set reaches the preset threshold.

Alternatively, the first signaling may further carry a downlink timing difference that is measured by the terminal and that is between each inactivated cell set and each activated cell set.

Optionally, after the MeNB or the SeNB receives the first signaling, if the first signaling further carries the TA difference between the first cell set and the second cell set, the MeNB or the SeNB compares the TA difference with the maximum timing difference of the terminal, and continues to perform this step if a difference between the TA difference and the maximum timing difference of the terminal is relatively small, for example, is less than a preset difference threshold.

If the first signaling further carries the difference between the maximum timing difference of the terminal and the TA difference between the first cell set and the second cell set, the MeNB or the SeNB determines the difference, and continues to perform this step if the difference is relatively small, for example, is less than a preset difference threshold.

If the first signaling may further carry the alarm indication, the MeNB or the SeNB determines, according to the alarm indication, to continue to perform this step.

Step 204: The terminal starts timing when sending the first signaling, and when a timing time reaches a preset time, detects whether there is a TA difference that is between each cell set of the MeNB and each cell set of the SeNB and that reaches the preset threshold.

The preset time may be pre-configured on the terminal by the MeNB or the SeNB, or may be configured by the terminal. When performing timing, the terminal refuses to adjust the TA of the first cell set.

If a detection result of the terminal indicates that there is the TA difference that is between each cell set of the MeNB and each cell set of the SeNB and that reaches the preset threshold, it indicates that the MeNB or the SeNB does not process the first cell set or the second cell set, and the following step 205 is performed. If there is no TA difference that is between each cell set of the MeNB and each cell set of the SeNB and that reaches the preset threshold, it indicates that the MeNB or the SeNB processes the first cell set and the second cell set.

Step 205: If there is the TA difference that is between each cell set of the MeNB and each cell set of the SeNB and that reaches the preset threshold, the terminal stops sending uplink data in the first cell set or the second cell set according to a type of the first cell set and a type of the second cell set.

Specifically, if one of the first cell set and the second cell set is a master cell set and the other cell set is a secondary cell set, the terminal stops sending uplink data in the secondary cell set. If both the first cell set and the second cell set are secondary cell sets or master cell sets, the terminal selects one cell set from the first cell set and the second cell set, and stops sending uplink data in the selected cell set.

Optionally, if both the first cell set and the second cell set are master cell sets, the terminal stops sending uplink data in the second cell set.

Alternatively, if both the first cell set and the second cell set are secondary cell sets, the cell set may be selected from the first cell set and the second cell set in the following manners:
Manner 1: The second cell set that belongs to the SeNB is selected.
Manner 2: A cell set with smaller average RSRP, poorer average RSRQ, or a smaller average CQI is selected from the first cell set and the second cell set.
   The terminal measures RSRP, RSRQ, or a CQI of each cell in the first cell set, and calculates average RSRP, average RSRQ, or an average CQI of the first cell set according to the RSRP, the RSRQ, or the CQI of each cell in the first cell set. The terminal measures RSRP, RSRQ, or a CQI of each cell in the second cell set, and calculates average RSRP, average RSRQ, or an average CQI of the second cell set according to the RSRP, the RSRQ, or the CQI of each cell in the second cell set. The terminal compares the average RSRP of the first cell set with the average RSRP of the second cell set, compares the average RSRQ of the first cell set with the average RSPQ of the second cell set, or compares the average CQI of the first cell set with the average CQI of the second cell set, to obtain the cell set with the smaller average RSRP, the cell set with the poorer average RSRQ, or the cell set with the smaller average CQI.
Manner 3: A cell set with a smaller quantity of activated cells is selected from the first cell set and the second cell set.
   The first cell set includes at least one cell, and the second cell set also includes at least one cell. Accordingly, the terminal may obtain a quantity of activated cells included in the first cell set and a quantity of activated cells included in the second cell set, and compares the quantity of activated cells in the first cell set with the quantity of activated cells in the second cell set, to obtain the cell set with the smaller quantity of activated cells.
Manner 4: A TA difference between the first cell set and each cell set of the SeNB other than the second cell set and a TA difference between the second cell set and each cell set of the MeNB other than the first cell set are calculated, and a cell set corresponding to a calculated maximum TA difference is selected from the first cell set and the second cell set.

After selecting the cell set in which uplink data sending needs to be stopped, the terminal sends the second signaling to a base station corresponding to the cell set. The second signaling includes at least an identifier of the cell set and/or an uplink sending stopping instruction, and the second signaling is used to notify the base station that the terminal is to stop uplink sending in the cell set.

The base station receives the second signaling, and stops scheduling the terminal in the cell set according to the uplink sending stopping instruction and/or the identifier of the cell set that are/is included in the second signaling.

Further, if a detection result of the terminal indicates that there is no TA difference that is between each cell set of the MeNB and each cell set of the SeNB and that reaches the preset threshold, third signaling may be sent to the MeNB or the SeNB. The third signaling carries an alarm removing instruction, and the alarm removing instruction is used to notify the MeNB or the SeNB that there is no TA difference that is between cell sets and that reaches the preset threshold.

Further, the third signaling carries the identifier of the first cell set and the identifier of the second cell set, or may carry the difference between the maximum timing difference of the terminal and the TA difference between the first cell set and the second cell set, or the TA difference between the first cell set and the second cell set.

The MeNB or the SeNB receives the third signaling, and when determining, according to the third signaling, that the terminal processes the first cell set and the second cell set, stops processing the first cell set and the second cell set.

It should be noted that the terminal may not send the first signaling to the MeNB or the SeNB. That is, when determining that there is the second cell set that is of the SeNB and of which the TA difference from the first cell set reaches the preset threshold, the terminal directly performs the operation of stopping sending uplink data in the first cell set or the second cell set according to a type of the first cell set and a type of the second cell set. That is, step 204 may be not performed.

In this embodiment of the present invention, in the dual connectivity scenario, when the TA of the first cell set is adjusted, the TA offset of the first cell set is obtained; the TA difference between the first cell set and each cell set of the second base station is obtained according to the TA offset after the TA of the first cell set is adjusted; and if there is the second cell set of which the TA difference reaches the preset threshold, uplink data sending in the first cell set or the second cell set is stopped according to the type of the first cell set and the type of the second cell set. In this way, when the TA difference between the first cell set and the second cell set reaches the preset threshold because the TA of the first cell set is adjusted, the terminal takes corresponding measures to process the first cell set and the second cell set, so as to avoid a case in which the terminal breaks a connection to a network node and further huge damage is caused to network performance.

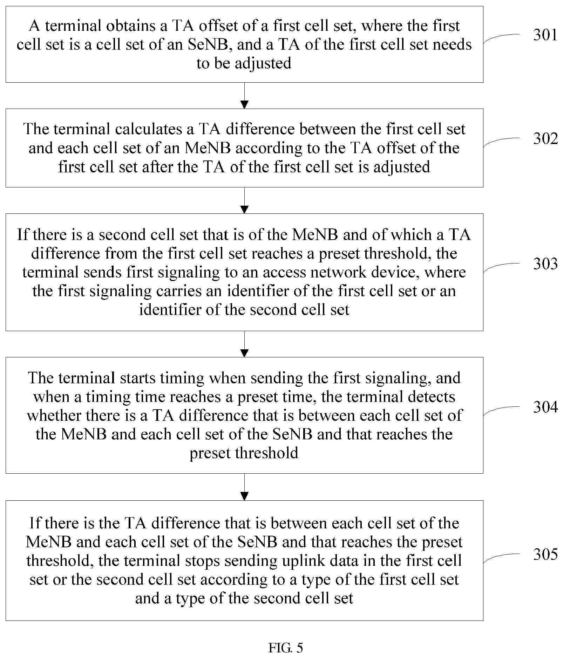

An embodiment of the present invention provides a communication method. This embodiment is applied to a dual connectivity scenario, the dual connectivity scenario includes an MeNB and an SeNB, and a terminal is connected to both the MeNB and the SeNB. Referring to FIG. 5, the method includes the following steps.

Step 301: The terminal obtains a TA offset of a first cell set, where the first cell set is a cell set of the SeNB, and a TA of the first cell set needs to be adjusted.

The terminal obtains the TA of the first cell set when the TA of the first cell set needs to be adjusted. There are two situations in which the TA of the first cell set needs to be adjusted. One is that the SeNB needs to adjust the TA of the first cell set, and the other is that the terminal needs to actively adjust the TA of the first cell set.

When the SeNB adjusts the TA of the first cell set, the SeNB sends a timing advance command to the terminal, and the timing advance command carries the TA offset of the first cell set. Accordingly, this step may be as follows: The terminal receives the timing advance command sent by the SeNB, and extracts the TA offset of the first cell set from the timing advance command. When the terminal actively adjusts the TA of the first cell set, the terminal generates the TA offset of the first cell set.

Step 302: The terminal calculates a TA difference between the first cell set and each cell set of the MeNB according to the TA offset of the first cell set after the TA of the first cell set is adjusted.

Specifically, the terminal calculates the adjusted TA according to the TA offset of the first cell set and the current TA of the first cell set, and calculates a difference between the adjusted TA and a TA of each cell set of the MeNB, to obtain the TA difference between the first cell set with the adjusted TA and each cell set of the MeNB.

In the two base stations included in the dual connectivity scenario, one base station is a master base station, that is, the MeNB, and the other base station is a secondary base station, that is, the SeNB. The SeNB is configured by the MeNB for the terminal. The terminal cannot break a connection to the MeNB; otherwise, the terminal may stop all uplink transmission. Cell sets of the MeNB include two types of cell sets: a master cell set and a secondary cell set, and similarly, cell sets of the SeNB also include a master cell set and a secondary cell set.

It should be noted that, in this embodiment, after obtaining the TA offset of the first cell set, instead of immediately adjusting the TA of the first cell set according to the TA offset, the terminal first refuses to adjust the TA of the first cell set, and performs this step.

Step 303: If there is a second cell set that is of the MeNB and of which a TA difference from the first cell set reaches a preset threshold, the terminal sends first signaling to an access network device, where the first signaling carries an identifier of the first cell set or an identifier of the second cell set.

If there is only one cell set that is of the MeNB and of which a TA difference from the first cell set reaches the preset threshold, the second cell set is the one cell set. If there are multiple cell sets that are of the MeNB and of which TA differences separately from the first cell set reach the preset threshold, the second cell set is the multiple cell sets.

The access network device may be the MeNB or the SeNB. The preset threshold may be a maximum timing difference of the terminal or a pre-configured threshold, and the pre-configured threshold is less than the maximum timing difference of the terminal. The pre-configured threshold may be pre-configured on the terminal by the MeNB or the SeNB, or may be pre-configured on the terminal by technical personnel. The pre-configured threshold is less than the maximum timing difference of the terminal, and in this way, the first cell set and the second cell set can be processed in advance before a time t of an overlapping part between uplink data sent in the first cell set and uplink data sent in the second cell set reaches the maximum timing difference, so as to prevent a time t of an overlapping part between any two pieces of uplink data from exceeding the maximum timing difference.

Optionally, in this step, the terminal may send the first signaling to the MeNB or the SeNB according to a type of the first cell set and a type of the second cell set, which is specifically as follows:
If both the first cell set and the second cell set are master cell sets, the terminal sends the first signaling to the MeNB, where the first signaling is used to request the MeNB to configure a new SeNB for the terminal; and sends second signaling to the SeNB, where the second signaling is used to notify the SeNB that the terminal is to stop uplink transmission in the first cell set. The first signaling carries the identifier of the second cell set, and the second signaling carries the identifier of the first cell set. The MeNB receives the first signaling, determines the second cell set identified by the identifier that is of the second cell set and that is carried in the first signaling, and when determining that the second cell set is a master cell set, determines to configure a new SeNB for the terminal. The new SeNB selects a third cell set for the terminal from a cell set of the new SeNB, and configures the third cell set for the terminal. The SeNB receives the second signaling, and stops scheduling the terminal in the first cell set according to the identifier that is of the first cell set and that is carried in the second signaling. Alternatively, the terminal sends the first signaling to the SeNB. The first signaling is used to request the SeNB to configure a new cell set for the terminal, and the first signaling carries the identifier of the first cell set. The SeNB stops scheduling the terminal in the first cell set, selects a third cell set for the terminal from cell sets of the SeNB other than the first cell set, and configures the third cell set for the terminal.

If the first cell set is a master cell set and the second cell set is a secondary cell set, the terminal sends the first signaling to the MeNB. The first signaling is used to request the MeNB to configure a new secondary cell set for the terminal, and the first signaling carries the identifier of the second cell set. The MeNB receives the first signaling, determines the cell set identified by the identifier of the second cell set, and when determining that the cell set is a secondary cell set, determines to configure a new secondary cell set for the terminal, stops scheduling the terminal in the second cell set, selects a third cell set from other cell sets of the MeNB other than the second cell set, and configures the third cell set for the terminal.

If the first cell set is a secondary cell set and the second cell set is a master cell set, the terminal sends the first signaling to the MeNB, where the first signaling is used to request the MeNB to configure a new SeNB for the terminal, and the first signaling carries the identifier of the second cell set; and sends second signaling to the SeNB, where the second signaling is used to notify the original SeNB that the terminal is to stop uplink transmission in the first cell set, and the second signaling carries the identifier of the first cell set. The MeNB receives the first signaling, and configures a new SeNB for the terminal. The new SeNB selects a third cell set for the terminal from a cell set of the new SeNB, and configures the third cell set for the terminal. The SeNB receives the second signaling, and stops scheduling the terminal in the first cell set according to the identifier that is of the first cell set and that is carried in the second signaling. Alternatively, the terminal sends the first signaling to the SeNB. The first signaling is used to request the SeNB to configure a new secondary cell set for the terminal, and the first signaling carries the identifier of the first cell set. The SeNB stops scheduling the terminal in the first cell set according to the identifier of the first cell set, selects a third cell set for the terminal from cell sets of the SeNB other than the first cell set, and configures the third cell set for the terminal.

If both the first cell set and the second cell set are secondary cell sets, the terminal selects a cell set from the first cell set and the second cell set, and sends the first signaling to a base station corresponding to the selected cell set. The first signaling is used to request the base station to configure a secondary cell set for the terminal, and the first signaling carries an identifier of the selected cell set. The base station receives the first signaling, stops uplink transmission in the cell set identified by the identifier that is of the cell set and that is carried in the first signaling, selects a third cell set from other cell sets of the base station other than the cell set identified by the identifier of the cell set, and configures the third cell set for the terminal.

Optionally, the terminal may select the cell set in the following manners:
Manner 1: The first cell set that belongs to the SeNB is selected.
Manner 2: A cell set with smaller average RSRP (Reference Signal Receiving Power, reference signal received power), poorer average RSRQ (Reference Signal Receiving Quality, reference signal received quality), or a smaller average CQI (Channel Quality Indicator, channel quality indicator) is selected from the first cell set and the second cell set.
   The average RSRP, the average RSRQ, or the average CQI is used to represent signal quality of the cell set. The terminal measures RSRP, RSRQ, or a CQI of each cell in the first cell set, and calculates average RSRP, average RSRQ, or an average CQI of the first cell set according to the RSRP, the RSRQ, or the CQI of each cell in the first cell set. The terminal measures RSRP, RSRQ, or a CQI of each cell in the second cell set, and calculates average RSRP, average RSRQ, or an average CQI of the second cell set according to the RSRP, the RSRQ, or the CQI of each cell in the second cell set. The terminal compares the average RSRP of the first cell set with the average RSRP of the second cell set, compares the average RSRQ of the first cell set with the average RSPQ of the second cell set, or compares the average CQI of the first cell set with the average CQI of the second cell set, to obtain the cell set with the smaller average RSRP, the cell set with the poorer average RSRQ, or the cell set with the smaller average CQI.
Manner 3: A cell set with a smaller quantity of activated cells is selected from the first cell set and the second cell set.
   The terminal may obtain a quantity of activated cells included in the first cell set and a quantity of activated cells included in the second cell set, and compares the quantity of activated cells in the first cell set with the quantity of activated cells in the second cell set, to obtain the cell set with the smaller quantity of activated cells.
Manner 4: A TA difference between the first cell set and each cell set of the MeNB other than the second cell set and a TA difference between the second cell set and each cell set of the SeNB other than the first cell set are calculated, and a cell set corresponding to a calculated maximum TA difference is selected from the first cell set and the second cell set.

Further, in this step, the first signaling may further carry a TA difference between the first cell set and the second cell set.

Alternatively, the first signaling may further carry a difference between the maximum timing difference of the terminal and a TA difference between the first cell set and the second cell set.

Alternatively, the first signaling may further carry an alarm indication, and the alarm indication is used to indicate that a TA difference between the first cell set and the second cell set reaches the preset threshold.

Alternatively, the first signaling may further carry a downlink timing difference that is measured by the terminal and that is between each inactivated cell set and each activated cell set.

Optionally, after the MeNB or the SeNB receives the first signaling, if the first signaling further carries the TA difference between the first cell set and the second cell set, the MeNB or the SeNB compares the TA difference with the maximum timing difference of the terminal, and continues to perform this step if a difference between the TA difference and the maximum timing difference of the terminal is relatively small, for example, is less than a preset difference threshold.

If the first signaling further carries the difference between the maximum timing difference of the terminal and the TA difference between the first cell set and the second cell set, the MeNB or the SeNB determines the difference, and continues to perform this step if the difference is relatively small, for example, is less than a preset difference threshold.

If the first signaling may further carry the alarm indication, the MeNB or the SeNB determines, according to the alarm indication, to continue to perform this step.

Step 304: The terminal starts timing when sending the first signaling, and when a timing time reaches a preset time, detects whether there is a TA difference that is between each cell set of the MeNB and each cell set of the SeNB and that reaches the preset threshold.

The preset time may be pre-configured on the terminal by the MeNB or the SeNB, or may be configured by the terminal. When performing timing, the terminal refuses to adjust the TA of the first cell set.

If a detection result of the terminal indicates that there is the TA difference that is between each cell set of the MeNB and each cell set of the SeNB and that reaches the preset threshold, it indicates that the MeNB or the SeNB does not process the first cell set or the second cell set, and the following step 305 is performed. If there is no TA difference that is between each cell set of the MeNB and each cell set of the SeNB and that reaches the preset threshold, it indicates that the MeNB or the SeNB processes the first cell set and the second cell set.

Step 305: If there is the TA difference that is between each cell set of the MeNB and each cell set of the SeNB and that reaches the preset threshold, the terminal stops sending uplink data in the first cell set or the second cell set according to a type of the first cell set and a type of the second cell set.

Specifically, if one of the first cell set and the second cell set is a master cell set and the other cell set is a secondary cell set, the terminal stops sending uplink data in the secondary cell set. If both the first cell set and the second cell set are secondary cell sets or master cell sets, the terminal selects one cell set from the first cell set and the second cell set, and stops sending uplink data in the selected cell set.

Optionally, if both the first cell set and the second cell set are master cell sets, the terminal stops sending uplink data in the first cell set.

Alternatively, if both the first cell set and the second cell set are secondary cell sets, the cell set may be selected from the first cell set and the second cell set in the following manners:
Manner 1: The first cell set that belongs to the SeNB is selected.
Manner 2: A cell set with smaller average RSRP, poorer average RSRQ, or a smaller average CQI is selected from the first cell set and the second cell set.
   The terminal measures RSRP, RSRQ, or a CQI of each cell in the first cell set, and calculates average RSRP, average RSRQ, or an average CQI of the first cell set according to the RSRP, the RSRQ, or the CQI of each cell in the first cell set. The terminal measures RSRP, RSRQ, or a CQI of each cell in the second cell set, and calculates average RSRP, average RSRQ, or an average CQI of the second cell set according to the RSRP, the RSRQ, or the CQI of each cell in the second cell set. The terminal compares the average RSRP of the first cell set with the average RSRP of the second cell set, compares the average RSRQ of the first cell set with the average RSPQ of the second cell set, or compares the average CQI of the first cell set with the average CQI of the second cell set, to obtain the cell set with the smaller average RSRP, the cell set with the poorer average RSRQ, or the cell set with the smaller average CQI.
Manner 3: A cell set with a smaller quantity of activated cells is selected from the first cell set and the second cell set.
   The first cell set includes at least one cell, and the second cell set also includes at least one cell. Accordingly, the terminal may obtain a quantity of activated cells included in the first cell set and a quantity of activated cells included in the second cell set, and compares the quantity of activated cells in the first cell set with the quantity of activated cells in the second cell set, to obtain the cell set with the smaller quantity of activated cells.
Manner 4: A TA difference between the first cell set and each cell set of the MeNB other than the second cell set and a TA difference between the second cell set and each cell set of the SeNB other than the first cell set are calculated, and a cell set corresponding to a calculated maximum TA difference is selected from the first cell set and the second cell set.

After selecting the cell set in which uplink data sending needs to be stopped, the terminal sends the second signaling to a base station corresponding to the cell set. The second signaling includes at least an identifier of the cell set and/or an uplink sending stopping instruction, and the second signaling is used to notify the base station that the terminal is to stop uplink sending in the cell set.

The base station receives the second signaling, and stops scheduling the terminal in the cell set according to the uplink sending stopping instruction and/or the identifier of the cell set that are/is included in the second signaling.

Further, if a detection result of the terminal indicates that there is no TA difference that is between each cell set of the MeNB and each cell set of the SeNB and that reaches the preset threshold, third signaling may be sent to the MeNB or the SeNB. The third signaling carries an alarm removing instruction, and the alarm removing instruction is used to notify the MeNB or the SeNB that there is no TA difference that is between cell sets and that reaches the preset threshold.

Further, the third signaling carries the identifier of the first cell set and the identifier of the second cell set, or may carry the difference between the maximum timing difference of the terminal and the TA difference between the first cell set and the second cell set, or the TA difference between the first cell set and the second cell set.

The MeNB or the SeNB receives the third signaling, and when determining, according to the third signaling, that the terminal processes the first cell set and the second cell set, stops processing the first cell set and the second cell set.

It should be noted that the terminal may not send the first signaling to the MeNB or the SeNB. That is, when determining that there is the second cell set that is of the SeNB and of which the TA difference from the first cell set reaches the preset threshold, the terminal directly performs the operation of stopping sending uplink data in the first cell set or the second cell set according to a type of the first cell set and a type of the second cell set. That is, step 304 may be not performed.

In this embodiment of the present invention, in the dual connectivity scenario, when the TA of the first cell set is adjusted, the TA offset of the first cell set is obtained; the TA difference between the first cell set and each cell set of the second base station is obtained according to the TA offset after the TA of the first cell set is adjusted; and if there is the second cell set of which the TA difference reaches the preset threshold, uplink data sending in the first cell set or the second cell set is stopped according to the type of the first cell set and the type of the second cell set. In this way, when the TA difference between the first cell set and the second cell set reaches the preset threshold because the TA of the first cell set is adjusted, the terminal takes corresponding measures to process the first cell set and the second cell set, so as to avoid a case in which the terminal breaks a connection to a network node and further huge damage is caused to network performance.

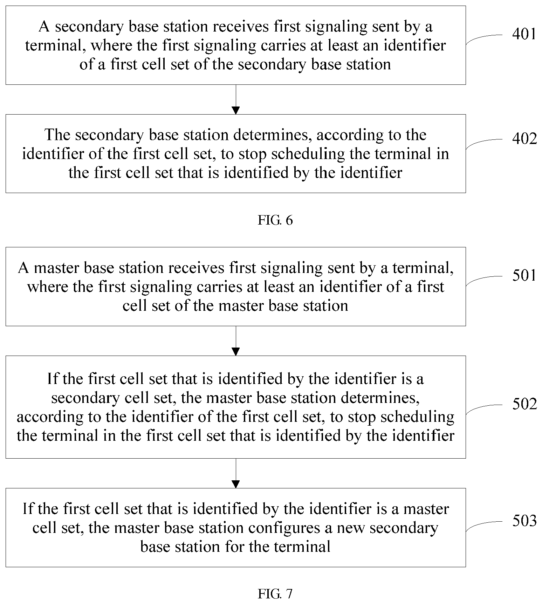

Referring to FIG. 6, an embodiment of the present invention provides a communication method, including the following steps:
Step 401: A secondary base station receives first signaling sent by a terminal, where the first signaling carries at least an identifier of a first cell set of the secondary base station.
Step 402: The secondary base station determines, according to the identifier of the first cell set, to stop scheduling the terminal in the first cell set that is identified by the identifier.

Referring to FIG. 7, an embodiment of the present invention provides a communication method, including the following steps:
Step 501: A master base station receives first signaling sent by a terminal, where the first signaling carries at least an identifier of a first cell set of the master base station.
Step 502: If the first cell set that is identified by the identifier is a secondary cell set, the master base station determines, according to the identifier of the first cell set, to stop scheduling the terminal in the first cell set that is identified by the identifier.
Step 502: If the first cell set that is identified by the identifier is a master cell set, the master base station configures a new secondary base station for the terminal.

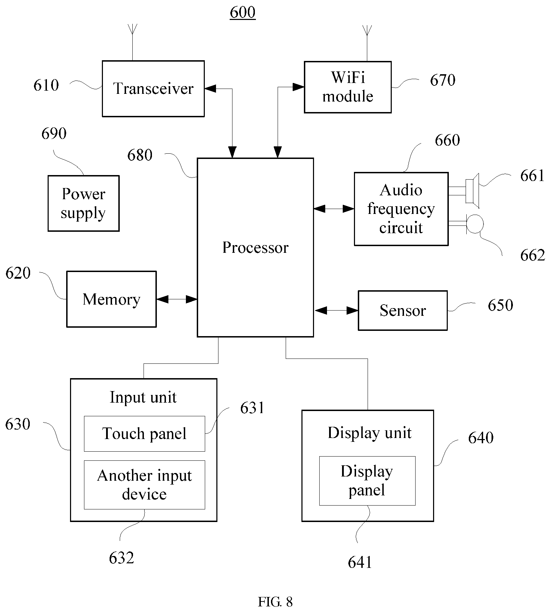

Referring to FIG. 8, an embodiment of the present invention provides a terminal 600. The terminal 600 may be a terminal device including a mobile phone, a tablet computer, a PDA (Personal Digital Assistant, personal digital assistant), and the like. For example, the terminal 600 is a mobile phone. FIG. 8 is a block diagram of a partial structure of a mobile phone 600 related to the terminal provided in this embodiment of the present invention. Referring to FIG. 8, the mobile phone 600 includes components such as a transceiver 610, a memory 620, an input unit 630, a display unit 640, a sensor 650, an audio frequency circuit 660, a WiFi (wireless fidelity, Wireless Fidelity) module 670, a processor 680, and a power supply 690. A person skilled in the art may understand that the structure of the mobile phone shown in FIG. 8 is only used as an example of implementation, and imposes no limitation on the mobile phone. The mobile phone may include more or fewer components than those shown in the figure, or a combination of some components, or different component arrangements.

In the following, each integral component of the mobile phone 600 is described in detail with reference to FIG. 8.

The transceiver 610 may be an RF circuit, and may be configured to receive and send information, or receive and send a signal in a call process. In particular, after receiving downlink information from a base station, the transceiver 610 sends the downlink information to the processor 680 for processing, and sends related uplink data to the base station. Usually, the transceiver 610 includes but is not limited to an antenna, at least one amplifier, a transceiver, a coupler, an LNA (Low Noise Amplifier, low noise amplifier), a duplexer, and the like. In addition, the transceiver 610 may further communicate with a network and another device by means of wireless communication. The wireless communication may use any communications standard or protocol that includes but is not limited to GSM (Global System of Mobile communication, Global System for Mobile Communications), GPRS (General Packet Radio Service, general packet radio service), CDMA (Code Division Multiple Access, Code Division Multiple Access), WCDMA (Wideband Code Division Multiple Access, Wideband Code Division Multiple Access), LTE (Long Term Evolution, Long Term Evolution), an email, an SMS (Short Messaging Service, short message service), and the like.

The memory 620 may be configured to store a software program and a module. By running the software program and the module stored in the memory 620, the processor 680 performs various function applications of the mobile phone 600 and data processing. The memory 620 may mainly include a program storage area and a data storage area. The program storage area may store an operating system, an application program required by at least one function (such as a sound play function or an image play function), and the like. The data storage area may store data (such as audio data or an address book) created according to use of the mobile phone 600, and the like. In addition, the memory 620 may include a high-speed random access memory, or may further include a nonvolatile memory, such as at least one magnetic disk storage component, a flash memory component, or another volatile solid-state storage component.

The input unit 630 may be configured to: receive entered numeral or character information, and generate key signal input related to user setting and function control of the mobile phone 600. Specifically, the input unit 630 may include a touch panel 631 and another input device 632. The touch panel 631 is also referred to as a touchscreen and may collect a touch operation performed by a user on or near the touch panel 631 (such as an operation performed by the user on the touch panel 631 or near the touch panel 631 by using any proper object or accessory such as a finger or a stylus), and drive a corresponding connection apparatus according to a preset program. Optionally, the touch panel 631 may include two parts: a touch detection apparatus and a touch controller. The touch detection apparatus detects a touch position of the user, detects a signal brought by the touch operation, and sends the signal to the touch controller. The touch controller receives touch information from the touch detection apparatus, converts the touch information into touch point coordinates, sends the touch point coordinates to the processor 680, and can receive and execute a command sent by the processor 680. In addition, the touch panel 631 may be implemented by using multiple types, such as a resistive type, a capacitive type, an infrared ray, or a surface acoustic wave. In addition to the touch panel 631, the input unit 630 may further include another input device 632. Specifically, the another input device 632 may include but is not limited to one or more of a physical keyboard, a function key (such as a volume control key or an on/off key), a trackball, a mouse, a joystick, or the like.

The display unit 640 may be configured to display information entered by the user or information provided for the user and various menus of the mobile phone 600. The display unit 640 may include a display panel 641. Optionally, the display panel 641 may be configured by using an LCD (Liquid Crystal Display, liquid crystal display), an OLED (Organic Light-Emitting Diode, organic light-emitting diode), or the like. Further, the touch panel 631 may cover the display panel 641. When detecting a touch operation on or near the touch panel 631, the touch panel 631 transmits the touch operation to the processor 680 to determine a type of a touch event, and then the processor 680 provides corresponding visual output on the display panel 641 according to the type of the touch event. Although in FIG. 8, the touch panel 631 and the display panel 641 are used as two independent components to implement input and input functions of the mobile phone 600, in some embodiments, the touch panel 631 may be integrated with the display panel 641 to implement the input and output functions of the mobile phone 600.

The mobile phone 600 may further include at least one sensor 650 such as a light sensor, a motion sensor, or another sensor. Specifically, the light sensor may include an ambient light sensor and a proximity sensor. The ambient light sensor may adjust luminance of the display panel 641 according to brightness of ambient light. The proximity sensor may turn off the display panel 641 and/or backlight when the mobile phone 600 moves to an ear. As a type of motion sensor, an accelerometer sensor may detect values of accelerations in different directions (usually, there are three axes), may detect a value and a direction of gravity in a static state, and may be configured to identify mobile phone posture application (such as switch between landscape and portrait screens, a related game, and magnetometer posture calibration), and a vibration-recognition related function (such as a pedometer and a stroke), and the like. A gyroscope, a barometer, a hygrometer, a thermometer, an infrared sensor, and another sensor may be further configured on the mobile phone 600, and details are not described herein.

The audio frequency circuit 660, a speaker 661, and a microphone 662 may provide an audio interface between the user and the mobile phone 600. The audio frequency circuit 660 may transmit, to the loudspeaker 661, an electrical signal converted from received audio data, and the loudspeaker 661 converts the electrical signal into a sound signal for output. On the other hand, the microphone 662 converts a collected sound signal into an electrical signal, the audio frequency circuit 660 converts the electrical signal into audio data upon receipt of the electrical signal and outputs the audio data to the processor 680 for processing, and then the audio data is sent to, for example, another mobile phone, by using the RF circuit 610, or the audio data is outputted to the memory 620 for further processing.

WiFi is a short-range wireless transmission technology. By using the WiFi module 670, the mobile phone 600 may help the user send or receive an email, browse a web page, access streaming media, and the like. The WiFi module 670 provides wireless broadband network access for the user. Although FIG. 8 shows the WiFi module 670, it can be understood that, the WiFi module 670 is not a mandatory component of the mobile phone 600 and may be omitted according to a requirement without changing the essence of the present invention.

The processor 680 is a control center of the mobile phone 600, uses various interfaces and lines to connect all parts of the entire mobile phone, and performs various functions of the mobile phone 600 and processes data by running or executing the software program and/or the module stored in the memory 620 and invoking data stored in the memory 620, so as to perform overall monitoring on the mobile phone. Optionally, the processor 680 may include one or more processing units. Preferably, an application processor and a modem processor may be integrated into the processor 680. The application processor mainly processes an operating system, a user interface, an application program, and the like. The modem processor mainly processes wireless communication. It may be understood that the modem processor may be not integrated into the processor 680.

The mobile phone 600 further includes the power supply 690 (such as a battery) that supplies power to each part. Preferably, the power supply may be logically connected to the processor 680 by using a power management system, so as to implement functions such as charging and discharging management and power consumption management by using the power management system.

Although not shown, the mobile phone 600 may further include a camera, a Bluetooth module, and the like. Details are not described herein.

In this embodiment of the present invention, the processor 680 and the memory 620 that are included in the terminal 600 have the following functions.

The processor 680 is configured to obtain a timing advance TA offset of a first cell set. The first cell set includes at least one cell, and the at least one cell is a cell that is of a first base station and whose TA needs to be adjusted.

The processor 680 is further configured to determine a TA difference between the first cell set and each cell set of a second base station according to the TA offset of the first cell set after a TA of the first cell set is adjusted.

The processor 680 is further configured to: if there is a second cell set that is in the cell sets of the second base station and of which a TA difference from the first cell set reaches a preset threshold stored in the memory 620, stop uplink transmission in the first cell set or the second cell set according to a type of the first cell set and a type of the second cell set.

Optionally, the processor 680 is configured to: if one of the first cell set and the second cell set is a master cell set and the other cell set is a secondary cell set, stop uplink transmission in the secondary cell set; or if both the first cell set and the second cell set are secondary cell sets or master cell sets, select one cell set from the first cell set and the second cell set, and stop uplink transmission in the selected cell set.

Optionally, the processor 680 is configured to: if both the first cell set and the second cell set are master cell sets, select a cell set that belongs to a secondary base station from the first cell set and the second cell set.

Optionally, if both the first cell set and the second cell set are secondary cell sets,
the processor 680 is configured to: select a cell set that belongs to a secondary base station from the first cell set and the second cell set; or select a cell set with smaller average RSRP, poorer average RSRQ, or a smaller average CQI from the first cell set and the second cell set; or select a cell set with a smaller quantity of activated cells from the first cell set and the second cell set; or calculate a TA difference between the first cell set and each cell set of the second base station other than the second cell set and a TA difference between the second cell set and each cell set of the first base station other than the first cell set, and select a cell set corresponding to a calculated maximum TA difference from the first cell set and the second cell set.

Optionally, the terminal further includes the following content.

The processor 680 is further configured to: if the stopped cell set is not the first cell set, adjust the TA of the first cell set according to the TA offset.

Optionally, the transceiver 610 is configured to send first signaling to an access network device. The first signaling carries at least an identifier of the first cell set or an identifier of the second cell set, and the first signaling is used for triggering stopping scheduling of the terminal by the access network device in the first cell set or the second cell set.

Optionally, the processor 680 is further configured to: start timing when the first signaling is sent; before a timing time reaches a preset time, refuse to adjust the TA of the first cell set; when the timing time reaches the preset time, detect whether there is a TA difference that is between each cell set of the first base station and each cell set of the second base station and that reaches the preset threshold; and if there is the TA difference, perform the operation of stopping uplink transmission in the first cell set or the second cell set according to a type of the first cell set and a type of the second cell set.

Optionally, the first signaling further carries at least one of a difference between a maximum timing difference of the terminal and the TA difference between the first cell set and the second cell set, a downlink timing difference that is measured by the terminal and that is between each inactivated cell set and each activated cell set, or an alarm indication, and the alarm indication is used to indicate that the TA difference between the first cell set and the second cell set reaches the preset threshold.

Optionally, the transceiver 680 is further configured to send second signaling to a base station corresponding to a cell set in which uplink transmission needs to be stopped. The second signaling includes at least an identifier of the cell set and/or an uplink sending stopping instruction, and the second signaling is used to notify the base station that the terminal is to stop uplink transmission in the cell set.

Optionally, the transceiver 680 is further configured to: if it is detected that the TA difference between the cell set of the first base station and the cell set of the second base station is less than the preset threshold, send third signaling to the access network device. The third signaling carries the identifier of the first cell set, the identifier of the second cell set, and an alarm removing instruction, and the third signaling is used to notify the access network device that the terminal processes the first cell set and the second cell set.

In this embodiment of the present invention, in a dual connectivity scenario, when the TA of the first cell set is adjusted, the TA offset of the first cell set is obtained; the TA difference between the first cell set and each cell set of the second base station is obtained according to the TA offset after the TA of the first cell set is adjusted; and if there is the second cell set of which the TA difference reaches the preset threshold, uplink transmission in the first cell set or the second cell set is stopped according to the type of the first cell set and the type of the second cell set. In this way, when the TA difference between the first cell set and the second cell set reaches the preset threshold because the TA of the first cell set is adjusted, the terminal takes corresponding measures to process the first cell set and the second cell set, so as to avoid a case in which the terminal breaks a connection to a network node and further huge damage is caused to network performance.

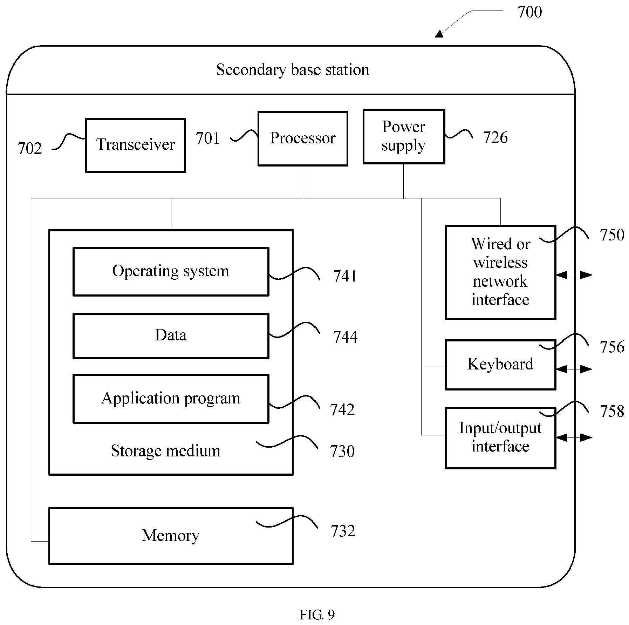

Referring to FIG. 9, FIG. 9 is a schematic structural diagram of a secondary base station according to an embodiment of the present invention. A secondary base station 700 may differ greatly because of a difference in configuration or performance, and may include at least one processor 701, a transceiver 702, a memory 732, and at least one storage medium 730 (for example, at least one mass storage device) that stores an application program 742 or data 744. The memory 732 and the storage medium 730 may be transient storage or persistent storage. A program stored in the storage medium 730 may include at least one of the foregoing modules (not shown in the figure), and each module may include a series of instruction operations performed on a network side device. Further, the processor 722 may be set to communicate with the storage medium 730 and perform, on the network side device 700, the series of instructions and operations in the storage medium 730.

The network side device 700 may further include at least one power supply 726, at least one wired or wireless network interface 750, at least one input/output interface 758, at least one keyboard 756, and/or at least one operating system 741, such as Windows ServerTM, Mac OS XTM, UnixTM, LinuxTM, or FreeBSDTM.

The processor 701 and the transceiver 702 of the network side device in the present invention have the following functions:
The transceiver 702 is configured to receive first signaling sent by a terminal. The first signaling carries at least an identifier of a first cell set of the secondary base station.

The processor 701 is configured to determine, according to the identifier of the first cell set, to stop scheduling the terminal in the first cell set that is identified by the identifier.

The first cell set is a cell set whose timing advance TA needs to be adjusted, and a TA difference between an adjusted TA and a TA of a cell set of a master base station reaches a preset threshold.

The processor 701 is configured to: after determining, according to the identifier of the first cell set, to stop scheduling the terminal in the first cell set that is identified by the identifier, determine a third cell set from another cell set of the secondary base station other than the first cell set, where the third cell set is a cell set that provides a service for the terminal; and configure the third cell set for the terminal.

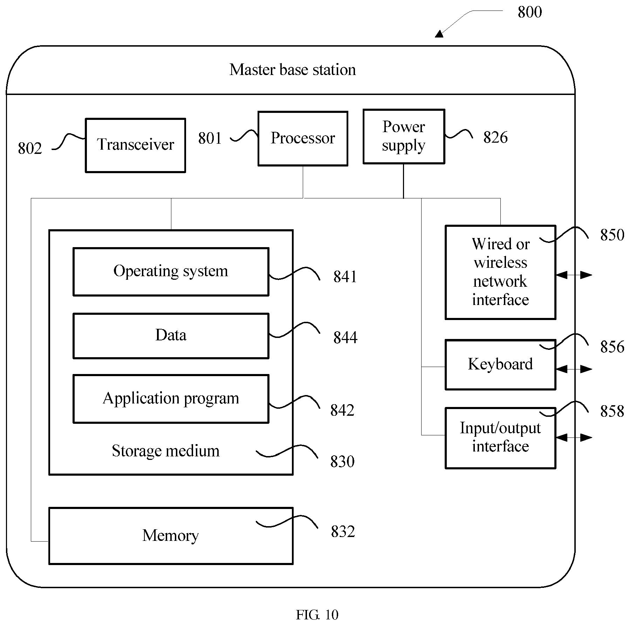

Referring to FIG. 10, FIG. 10 is a schematic structural diagram of a secondary base station according to an embodiment of the present invention. A master base station 800 may differ greatly because of a difference in configuration or performance, and may include at least one processor 801, a transceiver 802, a memory 832, and at least one storage medium 830 (for example, at least one mass storage device) that stores an application program 842 or data 844. The memory 832 and the storage medium 830 may be transient storage or persistent storage. A program stored in the storage medium 830 may include at least one of the foregoing modules (not shown in the figure), and each module may include a series of instruction operations performed on a network side device. Further, the processor 822 may be set to communicate with the storage medium 830 and perform, on the network side device 800, the series of instructions and operations in the storage medium 830.

The network side device 800 may further include at least one power supply 826, at least one wired or wireless network interface 850, at least one input/output interface 858, at least one keyboard 856, and/or at least one operating system 841, such as Windows ServerTM, Mac OS XTM, UnixTM, LinuxTM, or FreeBSDTM.

The processor 801 and the transceiver 802 of the network side device in the present invention have the following functions:
The transceiver 802 is configured to receive first signaling sent by a terminal. The first signaling carries at least an identifier of a first cell set of the master base station.

The processor 801 is configured to: if the first cell set that is identified by the identifier is a secondary cell set, determine, according to the identifier of the first cell set, to stop scheduling the terminal in the first cell set that is identified by the identifier; or if the first cell set that is identified by the identifier is a master cell set, configure a new secondary base station for the terminal.

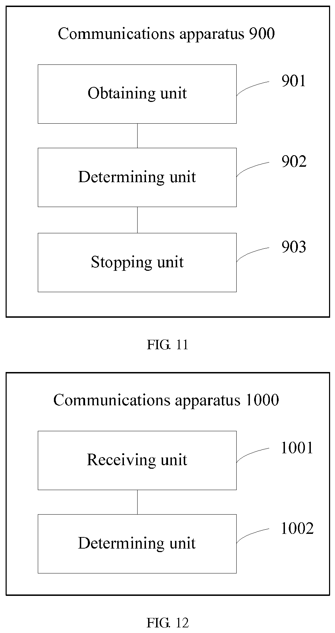

Referring to FIG. 11, an embodiment of the present invention provides a communications apparatus 900, and the apparatus includes:
an obtaining unit 901, configured to obtain a timing advance TA offset of a first cell set, where the first cell set includes at least one cell, and the at least one cell is a cell that is of a first base station and whose TA needs to be adjusted;
a determining unit 902, further configured to determine a TA difference between the first cell set and each cell set of a second base station according to the TA offset of the first cell set after a TA of the first cell set is adjusted; and
a stopping unit 903, configured to: if there is a second cell set that is in the cell sets of the second base station and of which a TA difference from the first cell set reaches a preset threshold, stop uplink transmission in the first cell set or the second cell set according to a type of the first cell set and a type of the second cell set.

Optionally, the stopping unit 903 is configured to: if one of the first cell set and the second cell set is a master cell set and the other cell set is a secondary cell set, stop uplink transmission in the secondary cell set; or if both the first cell set and the second cell set are master cell sets or secondary cell sets, select one cell set from the first cell set and the second cell set, and stop uplink transmission in the selected cell set.

Optionally, the stopping unit 903 is configured to: if both the first cell set and the second cell set are master cell sets, select a cell set that belongs to a secondary base station from the first cell set and the second cell set.

Optionally, if both the first cell set and the second cell set are secondary cell sets,
the stopping unit 903 is configured to: select a cell set that belongs to a secondary base station from the first cell set and the second cell set; or select a cell set with smaller average RSRP, poorer average RSRQ, or a smaller average CQI from the first cell set and the second cell set; or select a cell set with a smaller quantity of activated cells from the first cell set and the second cell set; or calculate a TA difference between the first cell set and each cell set of the second base station other than the second cell set and a TA difference between the second cell set and each cell set of the first base station other than the first cell set, and select a cell set corresponding to a calculated maximum TA difference from the first cell set and the second cell set.

Further, the apparatus further includes an adjustment unit.

The adjustment unit is configured to: if the stopped cell set is not the first cell set, adjust the TA of the first cell set according to the TA offset.

Further, the apparatus further includes a sending unit.

The sending unit is configured to send first signaling to an access network device. The first signaling carries at least an identifier of the first cell set or an identifier of the second cell set, and the first signaling is used for triggering stopping scheduling of the terminal by the access network device in the first cell set or the second cell set.

Further, the apparatus further includes a detection unit.

The detection unit is configured to: start timing when the first signaling is sent; before a timing time reaches a preset time, refuse to adjust the TA of the first cell set; when the timing time reaches the preset time, detect whether there is a TA difference that is between each cell set of the first base station and each cell set of the second base station and that reaches the preset threshold; and if there is the TA difference, perform the operation of stopping uplink transmission in the first cell set or the second cell set according to a type of the first cell set and a type of the second cell set.

Optionally, the first signaling further carries at least one of a difference between a maximum timing difference of the terminal and the TA difference between the first cell set and the second cell set, a downlink timing difference that is measured by the terminal and that is between each inactivated cell set and each activated cell set, or an alarm indication, and the alarm indication is used to indicate that the TA difference between the first cell set and the second cell set reaches the preset threshold.

Optionally, the sending unit is configured to send second signaling to a base station corresponding to a cell set in which uplink transmission needs to be stopped. The second signaling includes at least an identifier of the cell set and/or an uplink sending stopping instruction, and the second signaling is used to notify the base station that the terminal is to stop uplink transmission in the cell set.

Further, the sending unit is further configured to: if it is detected that the TA difference between the cell set of the first base station and the cell set of the second base station is less than the preset threshold, send third signaling to the access network device. The third signaling carries the identifier of the first cell set, the identifier of the second cell set, and an alarm removing instruction, and the third signaling is used to notify the access network device that the terminal processes the first cell set and the second cell set.

In this embodiment of the present invention, in a dual connectivity scenario, when the TA of the first cell set is adjusted, the TA offset of the first cell set is obtained; the TA difference between the first cell set and each cell set of the second base station is obtained according to the TA offset after the TA of the first cell set is adjusted; and if there is the second cell set of which the TA difference reaches the preset threshold, uplink transmission in the first cell set or the second cell set is stopped according to the type of the first cell set and the type of the second cell set. In this way, when the TA difference between the first cell set and the second cell set reaches the preset threshold because the TA of the first cell set is adjusted, the terminal takes corresponding measures to process the first cell set and the second cell set, so as to avoid a case in which the terminal breaks a connection to a network node and further huge damage is caused to network performance.

Referring to FIG. 12, an embodiment of the present invention provides a communications apparatus 1000, and the apparatus includes:
a receiving unit 1001, configured to receive first signaling sent by a terminal, where the first signaling carries at least an identifier of a first cell set of a secondary base station; and
a determining unit 1002, configured to determine, according to the identifier of the first cell set, to stop scheduling the terminal in the first cell set that is identified by the identifier.

Optionally, the first cell set is a cell set whose timing advance TA needs to be adjusted, and a TA difference between an adjusted TA and a TA of a cell set of a master base station reaches a preset threshold.

The apparatus further includes a configuration unit.

The configuration unit is configured to: determine a third cell set from another cell set of the secondary base station other than the first cell set, where the third cell set is a cell set that provides a service for the terminal; and configure the third cell set for the terminal.

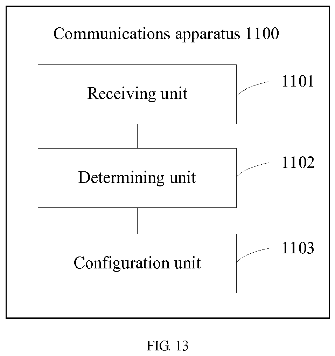

Referring to FIG. 13, an embodiment of the present invention provides a communications apparatus 1100, and the apparatus includes:
a receiving unit 1101, configured to receive first signaling sent by a terminal, where the first signaling carries at least an identifier of a first cell set of a master base station;
a determining unit 1102, configured to: if the first cell set that is identified by the identifier is a secondary cell set, determine, according to the identifier of the first cell set, to stop scheduling the terminal in the first cell set that is identified by the identifier; and
a configuration unit 1103, configured to: if the first cell set that is identified by the identifier is a master cell set, configure a new secondary base station for the terminal.

A person of ordinary skill in the art may understand that all or some of the steps of the embodiments may be implemented by hardware or a program instruction related hardware. The program may be stored in a computer-readable storage medium. The storage medium may include: a read-only memory, a magnetic disk, or an optical disc.

## Claims

1. A communication method performed by a terminal, the method comprising:
**a.)** obtaining a timing advance, TA, offset of a first cell set, wherein the first cell set comprises at least one cell, and the at least one cell is a cell that is of a first base station and whose TA needs to be adjusted (step 201),
**b.)** calculating an adjusted TA according to the TA offset of the first cell set and a current TA of the first cell set, and calculating a first TA difference between the adjusted TA of the first cell set and a TA of each cell set of a second base station, wherein the first base station is a master base station configuring the second base station, being a secondary base station, for the terminal (step 202),
**c.)** if there is a second cell set that is in the cell sets of the second base station and of which the first TA difference reaches a preset threshold performing the following steps:
**c1.)** if both, the first cell set and the second cell set are master cell sets, sending first signaling to the first base station, wherein the first signaling is used to request the first base station to configure a new secondary base station to substitute the second base station for the terminal, wherein the first signaling contains an identifier of the first cell set, and sending second signaling to the second base station, wherein the second signaling is used to notify the second base station that the terminal is to stop uplink transmission in the second cell set, wherein the second signaling contains an identifier of the second cell set (step 203),
**c2.)** if the first cell set is the master cell set and the second cell set is a secondary cell set,
∘ in a first alternative, sending third signaling to the first base station used to request the first base station to configure a new secondary base station for the terminal, wherein the third signaling contains the identifier of the first cell set, and sending fourth signaling to the second base station used to notify the second base station that the terminal is to stop uplink transmission in the second cell set, wherein the fourth signaling contains the identifier of the second cell set (step 203),
∘ in a second alternative instead of the first alternative, sending fifth signaling to the second base station used to request the second base station to configure a new secondary cell set for the terminal, wherein the fifth signaling contains the identifier of the second cell set (step 203),
**c3.)** if the first cell set is the secondary cell set and the second cell set is the master cell set, sending sixth signaling to the first base station used to request the first base station to configure a new secondary cell set,
wherein the sixth signaling contains the identifier of the first cell set (step 203),
**c4.)** if both, the first cell set and second cell set are secondary cell sets, selecting a cell set among the first and second cell set and sending a seventh signaling to a base station corresponding to the selected cell set, wherein the seventh signaling is used to request the base station of the selected cell set to configure a new secondary cell set and the seventh signaling contains an identifier of the selected cell set (step 203), wherein the selecting the cell set among the first cell set and the second cell set comprises:
∘ selecting a cell set with smaller average reference signal received power, RSRP, or a smaller average channel quality indicator, CQI, from the first cell set and the second cell set as the selected cell set,
or,
∘ selecting a cell set with a smaller quantity of activated cells from the first cell set and the second cell set as the selected cell set,
or,
∘ calculating a second TA difference between the first cell set and each cell set of the second base station other than the second cell set and a third TA difference between the second cell set and each cell set of the first base station other than the first cell set, and selecting a cell set among the first cell set and the second cell set corresponding to a calculated maximum TA difference among the second and third TA differences,
d.) starting a timing when sending any of the first, third, fifth, sixth or the seventh signaling; when the timing reaches a preset time, detecting whether there is a TA difference that is between each cell set of the first base station and each cell set of the second base station and that reaches the preset threshold; wherein when performing timing, the terminal refuses to adjust the TA of the first cell set; detecting whether there is the first TA difference that is between the first cell set of the first base station and each cell set of the second base station and that reaches the preset threshold; and if there is the first TA difference that reaches the preset threshold, performing the following steps: ∘ in case of step c1.), c2.), or c3.), stopping sending uplink data in the secondary cell set (step 205).
∘ in case of step c4.), sending eighth signaling to the base station corresponding to the selected cell set, wherein the eighth signaling contains an identifier of the selected cell set or an uplink sending stopping instruction, wherein the eighth signaling is used to notify the base station corresponding to the selected cell set that the terminal is to stop sending uplink data in the selected cell set and stopping sending uplink data in the selected cell set (step 205).

2. A terminal configured to perform the method according to claim 1.

3. A computer-readable storage medium having a program recorded thereon, wherein the program makes a computer execute the method according to claim 1.

## Patentansprüche

1. Kommunikationsverfahren, das von einem Endgerät ausgeführt wird, wobei das Verfahren umfasst:
a.) Erhalten eines Zeitvorlaufoffsets (Timing Advance offset, TA-Offsets) einer ersten Zellengruppe, wobei die erste Zellengruppe mindestens eine Zelle umfasst, und die mindestens eine Zelle eine Zelle von einer ersten Basisstation ist und deren TA angepasst werden muss (Schritt 201),
b.) Berechnen eines angepassten TA gemäß dem TA-Offset der ersten Zellengruppe und einem aktuellen TA der ersten Zellengruppe und Berechnen einer ersten TA-Differenz zwischen dem angepassten TA der ersten Zellengruppe und einem TA von jeder Zellengruppe einer zweiten Basisstation, wobei die erste Basisstation einer Masterbasisstation ist, welche die zweite Basisstation so konfiguriert, dass sie eine sekundäre Basisstation für das Endgerät ist (Schritt 202),
c.) wenn es eine zweite Zellengruppe gibt, die sich in den Zellengruppen der zweiten Basisstation befindet und von der die erste TA-Differenz einen voreingestellten Schwellenwert erreicht, Ausführen der folgenden Schritte:
c1.) wenn sowohl die erste Zellengruppe als auch die zweite Zellengruppe Masterzellengruppen sind, Senden einer ersten Signalisierung an die erste Basisstation, wobei die erste Signalisierung verwendet wird, um die erste Basisstation aufzufordern, eine neue sekundäre Basisstation zu konfigurieren, um die zweite Basisstation für das Endgerät zu ersetzen, wobei die erste Signalisierung eine Kennung der ersten Zellengruppe enthält, und Senden einer zweiten Signalisierung an die zweite Basisstation, wobei die zweite Signalisierung verwendet wird, um die zweite Basisstation zu benachrichtigen, dass das Endgerät eine Uplink-Übertragung in der zweiten Zellengruppe abbrechen muss, wobei die zweite Signalisierung eine Kennung der zweiten Zellengruppe enthält (Schritt 203),
c2.) wenn die erste Zellengruppe die Masterzellengruppe ist und die zweite Zellengruppe eine sekundäre Zellengruppe ist,
• in einer ersten Alternative, Senden einer dritten Signalisierung an die erste Basisstation, die verwendet wird, um die erste Basisstation aufzufordern, eine neue sekundäre Basisstation für das Endgerät zu konfigurieren, wobei die dritte Signalisierung die Kennung der ersten Zellengruppe enthält, und Senden einer vierten Signalisierung an die zweite Basisstation, um die zweite Basisstation zu benachrichtigen, dass das Endgerät eine Uplink-Übertragung in der zweiten Zellengruppe abbrechen muss, wobei die vierte Signalisierung die Kennung der zweiten Zellengruppe enthält (Schritt 203),
• in einer zweiten Alternative anstatt der ersten Alternative, Senden einer fünften Signalisierung an die zweite Basisstation, die verwendet wird, um die zweite Basisstation aufzufordern, eine neue sekundäre Zellengruppe für das Endgerät zu konfigurieren, wobei die fünfte Signalisierung die Kennung der zweiten Zellengruppe enthält (Schritt 203),
c3.) wenn die erste Zellengruppe die sekundäre Zellengruppe ist und die zweite Zellengruppe die Masterzellengruppe ist, Senden einer sechsten Signalisierung an die erste Basisstation, die verwendet wird, um die erste Basisstation aufzufordern, eine neue sekundäre Zellengruppe zu konfigurieren, wobei die sechste Signalisierung die Kennung der ersten Zellengruppe enthält (Schritt 203),
c4.) wenn sowohl die erste Zellengruppe als auch die zweite Zellengruppe sekundäre Zellengruppen sind, Auswählen einer Zellengruppe aus der ersten und der zweiten Zellengruppe und Senden einer siebten Signalisierung an eine Basisstation, die der ausgewählten Zellengruppe entspricht, wobei die siebte Signalisierung verwendet wird, um die Basisstation der ausgewählten Zellengruppe aufzufordern, eine neue sekundäre Zellengruppe zu konfigurieren, und wobei die siebte Signalisierung eine Kennung der ausgewählten Zellengruppe enthält (Schritt 203), wobei das Auswählen der Zellengruppe aus der ersten Zellengruppe und der zweiten Zellengruppe umfasst:
• Auswählen einer Zellengruppe mit einer kleineren durchschnittlichen Empfangsleistung eines Bezugssignals (Reference Signal Received Power, RSRP) oder einem kleineren durchschnittlichen Kanalqualitätsanzeiger (Channel Quality Indicator, CQI) aus der ersten Zellengruppe und der zweiten Zellengruppe als die ausgewählte Zellengruppe oder
• Auswählen einer Zellengruppe mit einer kleineren Anzahl an aktivierten Zellen aus der ersten Zellengruppe und der zweiten Zellengruppe als die ausgewählte Zellengruppe oder
• Berechnen einer zweiten TA-Differenz zwischen der ersten Zellengruppe und jeder Zellengruppe der zweiten Basisstation, die verschieden von der zweiten Zellengruppe ist, und einer dritten TA-Differenz zwischen der zweiten Zellengruppe und jeder Zellengruppe der ersten Basisstation, die verschieden von der ersten Zellengruppe ist, und Auswählen einer Zellengruppe aus der ersten Zellengruppe und der zweiten Zellengruppe, die einer berechneten maximalen TA-Differenz aus der zweiten und der dritten TA-Differenz entspricht,
d.) Starten einer Zeitmessung, wenn die erste, dritte, fünfte, sechste oder siebte Signalisierung gesendet wird; wenn die Zeitmessung eine voreingestellte Zeit erreicht, Erfassen, ob es eine TA-Differenz gibt, die zwischen jeder Zellengruppe der ersten Basisstation und jeder Zellengruppe der zweiten Basisstation liegt und die den voreingestellten Schwellenwert erreicht; wobei das Endgerät beim Ausführen der Zeitmessung ein Anpassen des TA der ersten Zellengruppe verweigert;
Erfassen, ob es die erste TA-Differenz ist, die zwischen jeder Zellengruppe der ersten Basisstation und jeder Zellengruppe der zweiten Basisstation liegt und die den voreingestellten Schwellenwert erreicht; und wenn es die erste TA-Differenz ist, die den voreingestellten Schwellenwert erreicht, Ausführen der folgenden Schritte:
• im Fall von Schritt c1.), c2.) oder c3.), Abbrechen des Sendens von Uplink-Daten in der sekundären Zellengruppe (Schritt 205),
• im Fall von Schritt c4.), Senden einer achten Signalisierung an die Basisstation, die der ausgewählten Zellengruppe entspricht, wobei die achte Signalisierung eine Kennung der ausgewählten Zellengruppe oder einen Uplink-Sendeabbruchbefehl enthält, wobei die achte Signalisierung verwendet wird, um die Basisstation, die der ausgewählten Zellengruppe entspricht, zu benachrichtigen, dass das Endgerät das Senden von Uplink-Daten in der ausgewählten Zellengruppe abbrechen muss, und Abbrechen des Sendens von Uplink-Daten in der ausgewählten Zellengruppe (Schritt 205).

2. Endgerät, das konfiguriert ist zum Ausführen des Verfahrens nach Anspruch 1.

3. Computerlesbares Speichermedium, in dem ein Programm aufgezeichnet ist, wobei das Programm einen Computer veranlasst, das Verfahren nach Anspruch 1 auszuführen.

## Revendications

1. Procédé de communication exécuté par un terminal, le procédé comprenant de :
a. obtenir un décalage d'avance temporelle, TA, d'un premier ensemble de cellules, dans lequel le premier ensemble de cellules comprend au moins une cellule, et l'au moins une cellule est une cellule qui est d'une première station de base et dont la TA doit être ajustée (étape 201),
b. calculer une TA ajustée en fonction du décalage de TA du premier ensemble de cellules et d'une TA courante du premier ensemble de cellules, et calculer une première différence de TA entre la TA ajustée du premier ensemble de cellules et une TA de chaque ensemble de cellules d'une seconde station de base,
dans lequel la première station de base est une station de base principale configurant la seconde station de base, qui est une station de base secondaire, pour le terminal (étape 202),
c. s'il y a un second ensemble de cellules qui se trouve dans les ensembles de cellules de la seconde station de base et dont la première différence de TA atteint un seuil prédéterminé, effectuer les étapes suivantes :
c1.) si à la fois le premier ensemble de cellules et le second ensemble de cellules sont des ensembles de cellules principales, envoyer une première signalisation à la première station de base, dans lequel la première signalisation est utilisée pour demander à la première station de base de configurer une nouvelle station de base secondaire pour remplacer la seconde station de base pour le terminal, dans lequel la première signalisation contient un identificateur du premier ensemble de cellules, et envoyer une deuxième signalisation à la seconde station de base, dans lequel la deuxième signalisation est utilisée pour notifier à la seconde station de base que le terminal doit cesser la transmission de liaison montante dans le second ensemble de cellules, dans lequel la deuxième signalisation contient un identificateur du second ensemble de cellules (étape 203),
c2.) si le premier ensemble de cellules est l'ensemble de cellules principales et que le second ensemble de cellules est un ensemble de cellules secondaires,
∘ dans une première variante, envoyer une troisième signalisation à la première station de base utilisée pour demander à la première station de base de configurer une nouvelle station de base secondaire pour le terminal, dans lequel la troisième signalisation contient l'identificateur du premier ensemble de cellules, et envoyer une quatrième signalisation à la seconde station de base utilisée pour notifier à la seconde station de base que le terminal doit cesser la transmission de liaison montante dans le second ensemble de cellules, dans lequel la quatrième signalisation contient l'identificateur du second ensemble de cellules (étape 203),
∘ dans une seconde variante à la place de la première variante, envoyer une cinquième signalisation à la seconde station de base utilisée pour demander à la seconde station de base de configurer un nouvel ensemble de cellules secondaires pour le terminal, dans lequel la cinquième signalisation contient l'identificateur du second ensemble de cellules (étape 203),
c3.) si le premier ensemble de cellules est l'ensemble de cellules secondaires et que le second ensemble de cellules est l'ensemble de cellules principales, envoyer une sixième signalisation à la première station de base utilisée pour demander à la première station de base de configurer un nouvel ensemble de cellules secondaires, dans lequel la sixième signalisation contient l'identificateur du premier ensemble de cellules (étape 203),
c4.) si à la fois le premier ensemble de cellules et le second ensemble de cellules sont des ensembles de cellules secondaires, sélectionner un ensemble de cellules entre le premier et le second ensemble de cellules et envoyer une septième signalisation à une station de base correspondant à l'ensemble de cellules sélectionné, dans lequel la septième signalisation est utilisée pour demander à la station de base de l'ensemble de cellules sélectionné de configurer un nouvel ensemble de cellules secondaires et la septième signalisation contient un identificateur de l'ensemble de cellules sélectionné (étape 203), dans lequel la sélection de l'ensemble de cellules entre le premier ensemble de cellules et le second ensemble de cellules comprend de :
∘ sélectionner un ensemble de cellules avec une puissance reçue du signal de référence, RSRP, moyenne plus faible ou un indicateur de qualité de canal, CQI, moyen plus faible à partir du premier ensemble de cellules et du second ensemble de cellules comme l'ensemble de cellules sélectionné, ou,
∘ sélectionner un ensemble de cellules avec une plus faible quantité de cellules activées à partir du premier ensemble de cellules et du second ensemble de cellules comme l'ensemble de cellules sélectionné, ou,
∘ calculer une seconde différence de TA entre le premier ensemble de cellules et chaque ensemble de cellules de la seconde station de base autre que le second ensemble de cellules et une troisième différence de TA entre le second ensemble de cellules et chaque ensemble de cellules de la première station de base autre que le premier ensemble de cellules, et sélectionner un ensemble de cellules entre le premier ensemble de cellules et le second ensemble de cellules correspondant à une différence de TA maximale calculée entre les deuxième et troisième différences de TA,
d.) démarrer une temporisation lors de l'envoi de l'une quelconque de la première, troisième, cinquième, sixième ou septième signalisation ; lorsque la temporisation atteint un temps prédéfini, détecter s'il existe une différence de TA qui est entre chaque ensemble de cellules de la première station de base et chaque ensemble de cellules de la seconde station de base et qui atteint le seuil prédéfini ; dans lequel lors de l'exécution de la temporisation, le terminal refuse d'ajuster la TA du premier ensemble de cellules ;
détecter s'il y a la première différence de TA qui est entre le premier ensemble de cellules de la première station de base et chaque ensemble de cellules de la seconde station de base et qui atteint le seuil prédéfini ; et s'il y a la première différence de TA qui atteint le seuil prédéfini, effectuer les étapes suivantes :
∘ dans le cas de l'étape c1.), c2.), ou c3.), cesser d'envoyer des données de liaison montante dans l'ensemble de cellules secondaires (étape 205).
∘ dans le cas de l'étape c4.), envoyer une huitième signalisation à la station de base correspondant à l'ensemble de cellules sélectionné, dans lequel la huitième signalisation contient un identificateur de l'ensemble de cellules sélectionné ou une instruction d'arrêt d'envoi de liaison montante, dans lequel la huitième signalisation est utilisée pour informer la station de base correspondant à l'ensemble de cellules sélectionné que le terminal doit cesser d'envoyer des données de liaison montante dans l'ensemble de cellules sélectionné et cesser d'envoyer des données de liaison montante dans l'ensemble de cellules sélectionné (étape 205).

2. Terminal configuré pour effectuer le procédé selon la revendication 1.

3. Support de stockage lisible par ordinateur ayant un programme enregistré sur celui-ci, dans lequel le programme fait exécuter à un ordinateur le procédé selon la revendication 1.
